# EUROPEAN PATENT APPLICATION

(11) **EP 0 775 570 A2**
(43) Date of publication of application: **28.05.1997**
(21) Application number: 96308436.3
(22) Date of filing: 21.11.1996
(51) Int. Cl.: B29C 67/00, G02F 1/00

(54) **Intensity homogenized surface exposure type photo-solidification modeling apparatus**

(30) Priority: 21.11.1995 JP 302793/95
(71) Applicant: CMET, Inc., Tokyo-to (JP); THE INSTITUTE OF PHYSICAL & CHEMICAL RESEARCH, Wako-shi Saitama-ken (JP)
(72) Inventor: Hayano, Seiji, Inagi-shi, Tokyo-to (JP); Nakagawa, Takeo, Wako-shi, Saitama-ken (JP)
(74) Representative: Bannerman, David Gardner

(57) **Abstract**

A photo-solidification modeling apparatus of an intensity homogenized surface exposure type includes a device for exposing a desired region of a surface of a photo-solidifying liquid to a light, a device for moving a solidified layer which has been exposed to the light by the exposing device and solidified, away from the liquid surface, and a device for repeating the light exposure by the exposing device and the movement by the moving device. The exposing device includes a light source, a device for homogenizing an intensity distribution of the light emitted from the light source, and a device for projecting an image on the liquid surface by the light emitted from the light source.

## Description

### BACKGROUND OF THE INVENTION

### 1. Field of the Invention

This invention relates to a photo-solidification modeling apparatus which is disclosed in an article titled "Automatic method for fabricating a three-dimensional plastic model with photo-hardening polymer", Rev. Sci. Instrum. 52(11), Nov. 1981.

### 2. Description of the Prior Art

In a photo-solidification modeling apparatus, a process of exposing a desired region of a liquid photo-hardening polymer surface to a light is repeatedly performed. At this time, in order to control the light exposure region, a method of controlling a spot light beam radiation position in the X- and Y-axis directions is mainly used. However, the spot beam radiation type has a disadvantage that the light exposure time per liquid surface is increased. Thus, the technique of Japanese Laid-Open Patent Publication No. 1-263031 has been proposed.

In this technique, a liquid-crystal panel is disposed above the liquid surface, and a transparent region and an opaque region of the liquid-crystal panel are controlled to define the light exposure region. With this method, surface type light exposure is performed, so that the light exposure time required per liquid surface is reduced.

In the surface type light exposure, reduction of exposure time can be attained, but uniform intensity of the exposure cannot be obtained in the surface. In the above-mentioned technique of Japanese Laid-Open Patent Publication No. 1-263031, in order to attempt to obtain a uniform distribution of the exposure intensity in the surface, a plurality of light sources are arranged above the liquid-crystal panel. However, the exposure intensity in a position right below a light source is different from that in a position between two light sources.

In a photo-solidification modeling apparatus, if the exposure intensity distribution in the surface is not uniform, the thickness as solidified may be varied, or the solidified object may be distorted. Thus, it is required to have a sufficiently uniform exposure intensity distribution.

### SUMMARY OF THE INVENTION

It is, accordingly, an object of the present invention to provide a surface exposure type photo-solidification modeling apparatus in which the exposure intensity distribution in the surface is uniform.

According to the invention, there is provided a photo-solidification modeling apparatus of an intensity homogenized surface exposure type, which comprises a device for exposing a desired region of a surface of a photo-solidifying liquid to a light, a device for moving a solidified layer which has been exposed to the light by the exposing device and solidified, away from the liquid surface, and a device for repeating the light exposure by the exposing device and the movement by the moving device, the exposing device including a light source, a device for homogenizing the intensity distribution of the light emitted from the light source, and a device for projecting an image on the liquid surface by the light emitted from the light source.

With this construction, the liquid surface is exposed to the light in a state of a uniform intensity distribution of the light emitted from the light source. Thus, the inconveniences that the solidification thickness is varied, or that the solidified object is distorted, can be prevented.

The present invention will be more fully understood from the following detailed description and appended claims when taken with the accompanying drawings.

### BRIEF DESCRIPTION OF THE DRAWINGS

FIG. 1 shows a first embodiment of the invention; and
FIG. 2 shows a second embodiment of the invention.

### DETAILED DESCRIPTION OF THE PREFERRED EMBODIMENTS

### First Embodiment

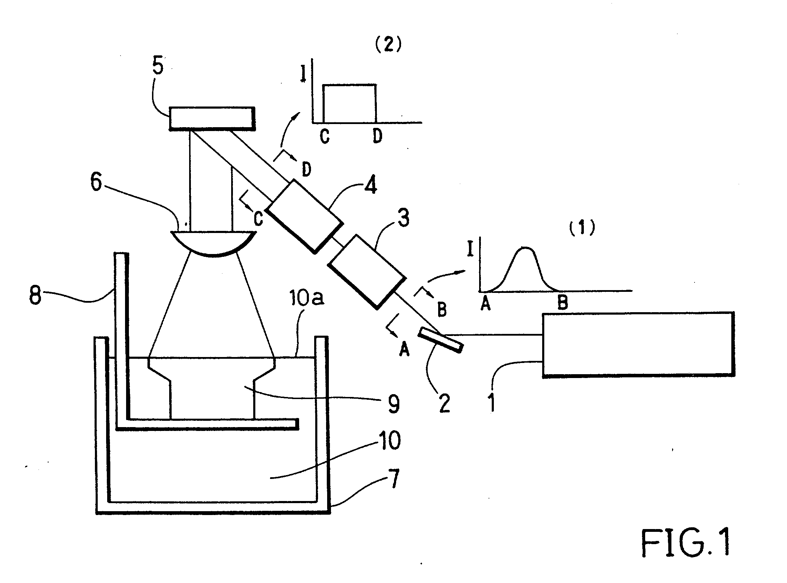

FIG. 1 shows a photo-solidification modeling apparatus according to a first embodiment of the present invention. As shown therein, the apparatus includes a tank 7 having an open top and adapted to store a photo-solidifying liquid 10 therein. A Z-table 8 is vertically movable in the tank 7.

The apparatus also includes a laser generator 1, a mirror 2, and a beam homogenizer 3. A laser beam emitted from the laser generator 1 has a Gaussian distribution as shown in graph (1) in FIG. 1. In graph (1), the ordinate shows a beam intensity, and the abscissa a distance within the A-B section. The beam homogenizer 3 homogenizes the light intensity distribution of the laser beam, and, for example, a rod homogenizer manufactured by Sigma Koki Co., Ltd. is suitably used. This homogenizer comprises a glass rod, and by utilizing the action of inner reflection at the peripheral surface of the rod, an output beam intensity in the periphery where the input beam intensity is small, is increased. As a result, the intensity distribution of the output laser beam is sufficiently homogenized.

The output laser beam of which intensity distribution has been homogenized is expanded by a beam expander 4. The intensity distribution in the cross section of the expanded laser beam is homogenized as shown in graph (2). The beam thus expanded and having homogenized intensity distribution is incident on a D. M. D. (Digital Micromirror Device) 5. The D. M. D. 5 is constructed by covering a surface of a RAM of CMOS with micromirrors corresponding to each cell. For example, one constructed by covering the surface of 2.3 cm² of CMOS with micromirrors of 768 x 576, is available. An angle of each mirror is changed by a write signal to the RAM of CMOS, so that a reflected image can be formed by a signal to each cell.

The reflected image formed by the D. M. D. 5 is clearly projected on a liquid surface 10a by a convex lens 6. As a result, the surface 10a can be exposed to a light at one time. As well known in the photo-solidification modeling method, light exposure and movement of the Z-table 8, as one set of operation, are repeated. Consequently, the solid product 9 is fabricated in the tank 7.

In this case, the intensity distribution in the liquid surface 10a is made uniform by the beam homogenizer 3, thus preventing the problem that the solidification thickness is varied by portions or that the solidifying degree is varied so that the solidified object 9 is distorted. The D. M. D. 5 is adapted to project an image and has no direct influence on the intensity distribution.

### Second Embodiment

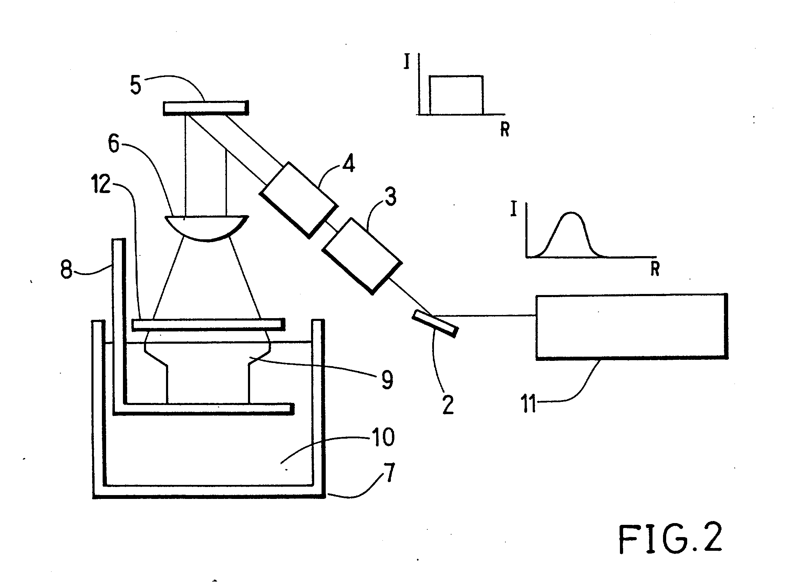

FIG. 2 shows a photo-solidification modeling apparatus according to a second embodiment of the present invention. In the apparatus of this embodiment, an ultraviolet lamp 11 is used instead of the laser generator 1. The beam homogenizer 3 homogenizes the intensity distribution of ultraviolet light emitted from the ultraviolet lamp 11.

In this embodiment, an image is formed by a liquid crystal panel 12, not by the D. M. D. Therefore, a mirror 15 is used instead of the D. M. D., and the liquid crystal panel 12 is disposed above the liquid surface. In this embodiment as well, the intensity distribution of the light incident on the liquid crystal panel 12 is homogenized by the beam homogenizer 3, so that the same effect with the first embodiment can be obtained.

The liquid surface to be irradiated is not limited to the top surface of the liquid, but a bottom or a side surface may be irradiated by using a transparent tank 7. In a method of irradiating the bottom surface, the Z-table 8 is moved upwardly, and in a method of irradiating the side surface, the table is moved laterally. Alternatively, instead of moving the table vertically, the liquid surface may be changed. In this case, it is possible to take a method of stacking thin liquid films one on another. In this way as well, solidified layers can be moved relative to the liquid surface to be stacked one on another successively. The present invention can be applied to any of the above methods.

As discussed above, the invention can eliminate the disadvantage of the method in which the surface is exposed at one time while utilizing the advantage of that method, so that a solid object with high accuracy may be fabricated in a short time.

While the invention has been described with reference to preferred embodiments thereof, it is to be understood that modifications or variations may be easily made without departing from the scope of the present invention which is defined by the appended claims.

## Claims

1. A photo-solidification modeling apparatus of an intensity homogenized surface exposure type, comprising:
means for exposing a desired region of a surface of a photo-solidifying liquid to a light;
means for moving a solidified layer which has been exposed to the light by said exposing means and solidified, away from the liquid surface; and
means for repeating the light exposure by said exposing means and the movement by said moving means;
said exposing means including a light source, means for homogenizing an intensity distribution of the light emitted from the light source, and means for projecting an image on the liquid surface by the light emitted from the light source.

2. The photo-solidification modeling apparatus as defined in claim 1, wherein said means for homogenizing the intensity distribution comprises a rod homogenizer.

3. The photo-solidification modeling apparatus as defined in claim 1, wherein said means for projecting the image comprises a digital micromirror device.

4. The photo-solidification modeling apparatus as defined in claim 1, wherein said means for projecting the image comprises a crystal panel.
